(19) **Europäisches Patentamt / European Patent Office / Office européen des brevets**

(11) **EP 1 275 951 B1**

(12) # EUROPÄISCHE PATENTSCHRIFT

(45) Veröffentlichungstag und Bekanntmachung des Hinweises auf die Patenterteilung:
**26.08.2009 Patentblatt 2009/35**

(51) Int Cl.:
***G01L 9/12*** *(2006.01)*

(21) Anmeldenummer: **02015427.4**

(22) Anmeldetag: **11.07.2002**

(54) **Drucksensor und Verfahren zu dessen Betriebsüberwachung**

Pressure sensor and procedure for monitoring its functioning

Capteur de pression et procédé de surveillance de son fonctionnement

(84) Benannte Vertragsstaaten:
**DE FR GB IT**

(30) Priorität: **11.07.2001 DE 10133745**

(43) Veröffentlichungstag der Anmeldung:
**15.01.2003 Patentblatt 2003/03**

(73) Patentinhaber: **Endress + Hauser GmbH + Co. KG**
**79689 Maulburg (DE)**

(72) Erfinder: **Pistorius, Stefan**
**79415 Bad Bellingen (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
EP-A- 0 524 550 US-A- 5 072 190
US-A- 5 212 989 US-A- 5 756 899

## Beschreibung

Die Erfindung betrifft einen Drucksensor und ein Verfahren zu dessen Betriebsüberwachung.

Genauer betrifft die Erfindung einen Drucksensor mit vorausschauender Wartungskontrolle bzw. Membranbruchüberwachung sowie ein Verfahren zur Membranbruchüberwachung.

Bei der Druckmessung wirkt generell eine Kraft auf die Fläche eines elastischen Verformungskörpers, wobei in Abhängigkeit von dessen Verformung ein Signal erzeugt wird, welches ein Maß für den anliegenden Druck ist.

Bei kapazitiven Drucksensoren wird beispielsweise eine bewegliche Elektrode eines Kondensators durch die Auslenkung des Verformungskörpers gegenüber einer fixierten Gegenelektrode verschoben, was eine messbare Kapazitätsänderung bewirkt. Für kapazitive Drucksensoren bieten sich insbesondere planare Verformungskörper wie Membranen, Platten oder Kreisscheiben an, wobei die bewegliche Elektrode als Beschichtung auf den planaren Verformungskörper aufgetragen und im Abstand d parallel zur Gegenelektrode angeordnet ist. Hierbei haben sich insbesondere Drucksensoren mit Scheiben aus spröden Materialien, vorzugsweise Keramikscheiben, als Verformungskörpern durchgesetzt.

Für bestimmte Anwendungen ist es vorteilhaft, wenn das Prozeßmedium nicht direkt auf den eigentlichen Drucksensor zur Erzeugung des Meßsignals, sondern auf einen vorgeschalteten Verformungskörper wirkt, dessen Verformung dann mittels einer Übertragungsflüssigkeit über ein geschlossenes Leitungssystem an den eigentlichen Drucksensor weitergegeben wird. Die vorgeschalteten Verformungskörper sind dabei insbesondere metallische Membranen.

Diese Membranen und deren Verbindungsstellen (Schweißnähte) können jedoch aufgrund von Alterungsprozessen bzw. Korrosion porös werden und schließlich brechen, was zu Verunreinigungen des Prozeßmediums mit der Übertragungsflüssigkeit führt. Der beschriebene Defekt würde vom Drucksensor nicht bemerkt werden, da weiterhin der Prozeßdruck auf den eigentlichen Sensor wirkt. Zudem besteht die Gefahr daß sich ein Bakterienherd bildet an der Bruchstelle, was insbesondere für die Lebensmittelindustrie inakzeptabel ist.

Um die geschilderten Folgen zu vermeiden, müssen die Membranen vorbeugend ohne Rücksicht auf ihren tatsächlichen Zustand in regelmäßigen Abständen überwacht und gegebenenfalls ausgetauscht werden. Dies führt zu einem erhöhten Wartungsaufwand mit entsprechenden Ausfallzeiten und damit verbundenen Kosten.

Die in U.S. Patent Nr. 5,212,989 offenbarte Druckmessvorrichtung umfasst ein Gehäuse das einen Durchgang aufweist mit einer ersten Öffnung und einem ersten, zum Prozeßmedium exponierten Verformungskörper, welcher die erste Öffnung abschließt, einer zweiten Öffnung und einem zweiten Verformungskörper, welcher die zweite Öffnung abschließt, und einer Übertragungsflüssigkeit zur Druckübertragung von dem ersten Verformungskörper auf den zweiten Verformungskörper; einen Drucksensor, welcher basierend auf der Auslenkung des zweiten Verformungskörpers ein Mess-Signal erzeugt.

U.S. Patent Nr. 5,072,190 offenbart einen Drucksensor, bei dem die elektrische Leitfähigkeit einer Übertragungsflüssigkeit überwacht wird, um Verunreinigungen zu detektieren.

U.S. Patent Nr. 3,231,815 betrifft eine Vorrichtung zum Detektieren von Partikeln in Flüssigkeiten, insbesondere von Rostteilchen in Flugbenzin.

Der Erfindung liegt die Aufgabe zugrunde, die herkömmlichen Drucksensoren mit vorgeschalteten Membranen bzw. Verformungskörpern dahingehend zu verbessern, daß eine tatsächliche Alterung bzw. ein Bruch der Membranen bzw. Verformungskörper frühzeitig erkannt werden kann.

Diese Aufgabe wird gelöst durch die Druckmessvorrichtung gemäß des unabhängigen Patentanspruchs 1. Weitere Vorteile und Gesichtspunkte der Erfindung ergeben sich aus den abhängigen Patentansprüchen, der Beschreibung und den Zeichnungen.

Die Erfindung basiert auf der Überlegung, daß beim Membranbruch nicht nur die Übertragungsflüssigkeit aus der Druckmessvorrichtung austritt, sondern gleichermaßen das Prozessmedium in die Druckmessvorrichtung eindringt und die Übertragungsflüssigkeit kontaminiert. Dies führt zu einer messbaren Veränderung der charakteristischen Eigenschaften der Flüssigkeit in der Druckmessvorrichtung. Durch Überwachung einer geeigneten Materialeigenschaft der Übertragungsflüssigkeit kann somit ein Membranbruch bzw. eine poröse Membran nachgewiesen werden.

Für die erfindungsgemäße Überwachung von kapazitiven Sensoren ist die relative Dielektrizitätskonstante $\varepsilon_r$ gewählt. Andere geeignete Materialeigenschaften, die jedoch von der Erfindung nicht umfasst sind, sind die elektrische Leitfähigkeit, die Wärmeleitfähigkeit, die Viskosität, oder das Absorptionsvermögen für elektromagnetische Strahlung, insbesondere Licht einer bestimmten Wellenlänge, oder der Brechungsindex bei einer bestimmten Wellenlänge, wobei die Auswahl einer Materialeigenschaft von dem Messprinzip des jeweiligen Drucksensors abhängt.

Die Erfindung ist sowohl für Vorrichtungen zur Messung des Absolutdrucks und Relativdrucks als auch für Vorrichtungen zur Differenzdruckmessung geeignet.

Die erfindungsgemäße Druckmessvorrichtung umfasst ein Gehäuse das einen Durchgang aufweist mit einer ersten Öffnung und einem ersten, zum Prozeßmedium exponierten Verformungskörper, welcher die erste Öffnung abschließt, einer zweiten Öffnung und einem zweiten Verformungskörper, welcher die zweite Öffnung abschließt, und einer Übertragungsflüssigkeit zur Druckübertragung von dem ersten Verformungskörper auf den zweiten Verformungskörper, einen Drucksensors, welcher basierend auf der Auslenkung des zweiten Verformungskörpers ein Mess-Signal erzeugt; wobei die Vorrichtung weiterhin ein Mittel zur Überwachung der relativen Dielektrizitätskonstanten der Übertragungsflüssigkeit aufweist.

Der Drucksensor ist vorzugsweise ein kapazitiver Drucksensor, insbesondere mit einem keramischen Verformungskörper, oder eine Polysiliziumzelle.

Zur Messung der charakteristischen Eigenschaften können sowohl die Sensorelemente zur Druckmessung benutzt werden, oder es können zusätzliche Sensorelemente bereitgestellt werden.

Bei einem kapazitiven Sensor kann die Dielektrizitätskonstante $\varepsilon_r$ beispielsweise zwischen den Elektroden zur Druckmessung bestimmt werden, oder es können zusätzliche Elektroden vorgesehen sein.

Die Erfindung wird im folgenden anhand der nachfolgenden Zeichnungen näher erläutert.

Es zeigt:

Fig.1: Einen Querschnitt durch eine erste Ausführungsform einer Druckmessvorrichtung gemäß der vorliegenden Erfindung;

Fig. 2a: Einen Querschnitt durch eine zweite Ausführungsform einer Druckmessvorrichtung gemäß der vorliegenden Erfindung;

Fig 2b: Eine Aufsicht auf die Gegenelektroden, Querschnitt durch eine zweite Ausführungsform eines Absolutdrucksensors gemäß der vorliegenden Erfindung;

Fig. 3: Einen Querschnitt durch eine Ausführungsform eines Differenzdrucksensors gemäß der vorliegenden Erfindung;

Fig. 4: Einen Teilquerschnitt einer weiteren Ausführungsform der vorliegenden Erfindung;

Fig. 5: Die Veränderung des Kapazitätsbands eines Drucksensors mit einer fehlerhaften Membran.

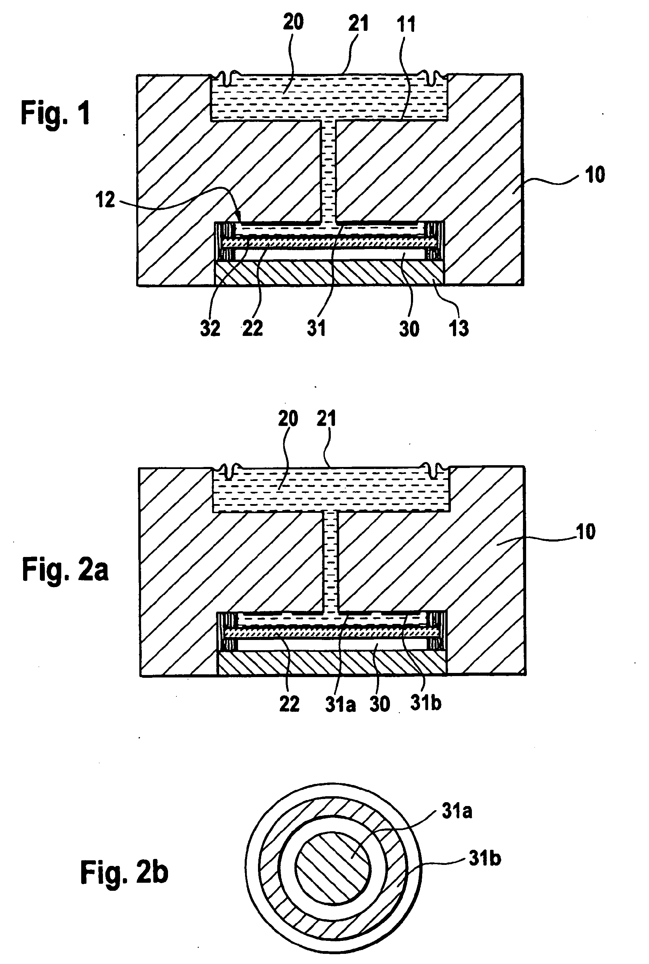

Zunächst wird die Erfindung anhand des Ausführungsbeispiels aus Figur 1 beschrieben.

Die erfindungsgemäße Druckmessvorrichtung weist ein vorzugsweise im wesentlichen zylindrisches Gehäuse 10 auf, welches in seinem Inneren einen Durchgang zwischen den Stirnseiten des Gehäuses definiert. Der Durchgang umfasst vorzugsweise eine erste und eine zweite Kammer 20 bzw. 30, welche durch Aussparungen 11, 12 in den Stirnseiten des Gehäuses gebildet sind. Die Kammern 20, 30 sind untereinander mittels einer Leitung verbunden. Die erste Kammer 20 ist durch einen vorzugsweise als Metallmembran 21 ausgebildeten ersten Verformungskörper verschlossen. Die Metallmembran 21 ist an der Stirnseite des Gehäuses 10 angeordnet und im Messbetrieb zum Prozessmedium exponiert.

Die zweite Kammer 30 ist mittels eines zweiten Verformungskörpers abgeschlossen, der als Keramikscheibe 22 ausgebildet ist. Das Volumen zwischen der Metallmembran 21 und der Keramikscheibe 22 ist vollständig mit einer nicht kompressiblen Übertragungsflüssigkeit gefüllt. Bei Verformung der Metallmembran 21 durch den Druck des Prozessmediums wird ebenfalls die Keramikscheibe 22 ausgelenkt.

Die Drucksensoren sind vorzugsweise so ausgelegt daß der Abstand d der Elektroden unter Prozeßdruck um nicht mehr als 20%, besonders bevorzugt um nicht mehr als 10%, von dem Gleichgewichtsabstand abweicht.

Als Überlastschutz der Keramikscheibe 22 ist zudem ein vorzugsweise planarer Körper 13 vorgesehen. Der Körper 13 ist parallel und beabstandet zur Außenseite der Keramikscheibe 22 angeordnet, wobei der Abstand so gewählt ist, daß die Keramikscheibe 22 bei einer kritischen Auslenkung den Körper 13 kontaktiert. Hierdurch wird die Auslenkung begrenzt.

Bei diesem Ausführungsbeispiel ist auf der dem Gehäuseinneren Fläche der Keramikscheibe 22 eine Elektrode 32 beabstandet zur Gegenelektrode 31 aufgebracht.

Eine Auslenkung der Keramikscheibe 22 unter Druck bewirkt eine Abstandsvergrößerung zwischen den beiden Elektroden 31 und 32 des kapazitiven Drucksensors, die mit einer Abnahme der Kapazität C des einhergeht, da die Kapazität umgekehrt proportional zum Abstand ist.

Die Kapazität C ist außerdem proportional zur relativen Dielektrizitätskonstanten des Mediums zwischen den Elektroden, also der Übertragungsflüssigkeit.

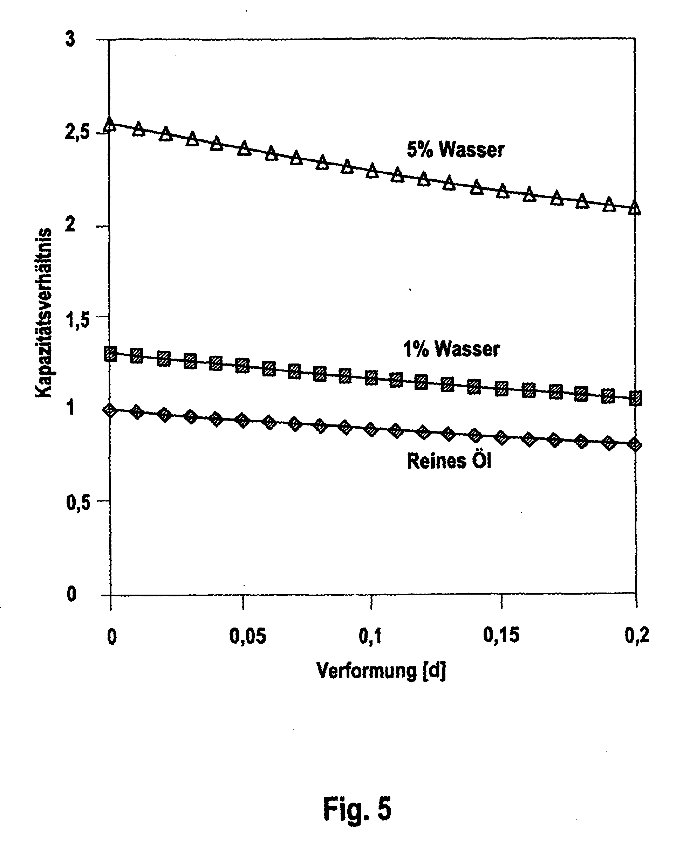

Bei einer defekten Membran 21 kann es zu einer Verunreinigung der Übertragungsflüssigkeit durch das Prozessmedium kommen, was zu einer Veränderung der relativen Dielektrizitätskonstanten und somit der Kapazität führt. Dieser Effekt ist kurz in Fig. 5 für eine Kontaminierung von Öl ($\varepsilon_r$ = 2,5) mit Wasser ($\varepsilon_r$ = 80) dargestellt.

Das Diagramm zeigt die relative Kapazität eines Sensorkondensators als Funktion der Verformung, d.h. der relativen Zunahme des Abstands d zwischen den Elektroden. Es sind Kurven für verschiedene Verunreinigungsgrade angegeben, wobei alle Kapazitätswerte mit der Kapazität bei reinem Öl und keiner Verformung normiert wurden.

Es zeigt sich, daß bereits eine Verunreinigung von wenigen Prozent zu einer starken Verschiebung des Kapazitätsbandes führt, die nicht durch eine Verformung aufgrund einer Druckänderung erklärt werden kann.

Beim Ausführungsbeispiel aus Fig. 1 ist im einfachsten Fall eine (nicht gezeigte) elektronische Steuereinrichtung vorgesehen, die beim Auftreten eines Kapazitätsverhältnis oberhalb eines kritischen Wertes $C > C_{krit}$ ein Signal ausgibt, welches die Notwendigkeit eines Membranaustauschs anzeigt.

In einer weiteren Ausführungsform ist eine Steuerungseinheit vorgesehen, welche das aktuell gemessene Kapazitätsverhältnis in ein Intervall von möglichen Kontaminierungswerten umrechnet, wobei hier die relativen Dielektrizitätskonstanten des jeweiligen Prozeßmediums und der Übertragungsflüssigkeit als Parameter zu berücksichtigen sind. Anhand der Kontaminierungswerte kann dann entschieden werden, wann ein Austausch erforderlich ist.

Durch Aufzeichnung der ermittelten Kontaminierung über die Betriebszeit kann für eine gegebene Prozeßumgebung das Alterungsverhalten der Membran 21 ermittelt werden, wodurch der tatsächlich erforderliche Wartungszeitpunkt optimiert werden kann.

Ein weiteres Ausführungsbeispiel einer Druckmessvorrichtung gemäß der vorliegenden Erfindung ist in Fign. 2a und 2b gezeigt. Die Vorrichtung hat im wesentlichen den gleichen Aufbau wie die Vorrichtung in Fig. 1 und gleiche Komponenten sind mit gleichen Bezugszeichen versehen.

Der wesentliche Unterschied besteht im Aufbau der Gegenelektrode welche mindestens zwei voneinander isolierte Teilelektroden 31a und 31b umfaßt. Die Teilelektroden können prinzipiell beliebige Formen und Flächenverhältnisse aufweisen.

Wie in der Aufsicht auf die Gegenelektrode in Fig. 2b dargestellt, sind die Teilelektroden 31a und 31b bevorzugt konzentrisch und flächengleich. Der ringförmige Aufbau der Gegenelektrode ist an sich bekannt. Er wird nach dem Stand der Technik gewählt, um zwischen Kapazitätsänderungen aufgrund der Wärmeausdehnung des Sensorgehäuses und Kapazitätsänderungen aufgrund der Durchbiegung der Keramikscheibe unter Prozeßdrucks zu unterscheiden. Hierbei bilden die Teilelektroden 31a und 31b jeweils einen Kondensator mit der Elektrode 32 auf der Keramikscheibe als Gegenelektrode. Wärmeausdehnung des Sensorgehäuses führt im wesentlichen zu gleichen Abstandsänderungen bei beiden Kondensatoren mit den Kapazitäten $C_{innen}$ und $C_{außen}$. Das Durchbiegen der Keramikscheibe bewirkt jedoch stärkere Abstandsänderungen für den inneren Kondensator. Die Druckmessvorrichtung ermittelt eine Druckänderung $\delta P$ somit als Funktion der Änderung beider Kapazitätswerte:

$$\delta P = \delta P \left[ (\delta C_{innen} - \delta C_{außen}) / (\delta C_{innen} + \delta C_{außen}) \right].$$

Erfindungsgemäß wird nun das Paar von Teilelektroden 31a und 31b als Überwachungskondensator geschaltet, dessen Kapazität $C_{Ü}$ von der Geometrie der Teilelektroden 31a und 31b und der Dielektrizitätskonstanten des Mediums zwischen den Teilelektroden abhängt. Insofern als die Geometrie der Teilelektroden unveränderlich ist, kann jede Kapazitätsänderung unmittelbar als Änderung der Dielektrizitätskonstanten und somit als Verunreinigung der Übertragungsflüssigkeit interpretiert werden.

In einer Ausführungsform ist eine elektronische Steuerungseinheit vorgesehen sein, welche die Bestimmung der Kapazität $C_{Ü}$ periodisch durchführt.

In einer anderen Ausführungsform führt eine elektronische Steuerungseinheit, die Bestimmung der Kapazität $C_{Ü}$ nur zur Kontrolle durch, wenn sich bei der Messung der Kapazitäten $C_{innen}$ und $C_{außen}$ Werte ergeben, die eine Verschiebung des Kapazitätsbereichs aufgrund von Verunreinigungen vermuten lassen, wie im Zusammenhang mit Fign. 1 und 5 diskutiert wurde.

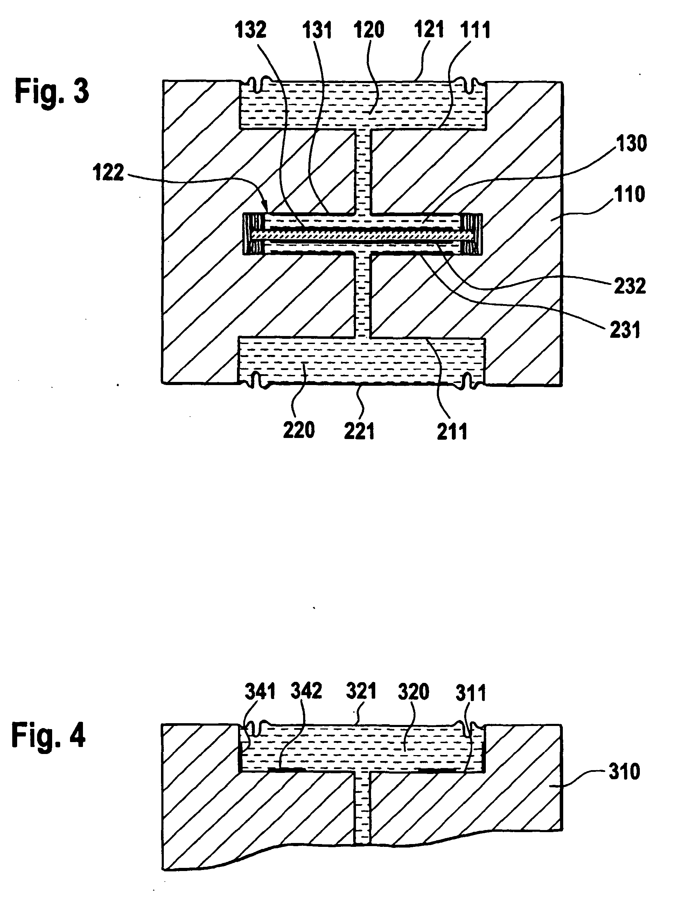

Das Prinzip der vorliegenden Erfindung kann auch bei einem Differenzdrucksensor eingesetzt werden. Ein erfindungsgemäßer Differenzdrucksensor ist in Fig. 3 gezeigt. Der Sensor umfaßt das Gehäuse 110 mit den beiden Membranen 121 und 221 zur Aufnahme des jeweiligen Prozeßdrucks an den beiden Stirnseiten des Gehäuses 110. Die beiden Membranen 121, 122 verschließen jeweils die Kammern 120, 220 in den Stirnseiten des Gehäuses, von denen jeweils ein Durchgang einer zentralen Kammer 130 führt. In der zentralen Kammer 130 ist ein Verformungskörper 122 angeordnet, welcher vorzugsweise als Keramikscheibe ausgebildet ist. Der Verformungskörper 122 sperrt den Durchgang zwischen den Stirnseiten des Gehäuses 110. Die beiden Teilvolumina zwischen dem Verformungskörper 122 und den beiden Metallmembranen 121, 221 an den Stirnseiten des Gehäuses sind vollständig mit einer Übertragungsflüssigkeit gefüllt. Wenn eine Druckdifferenz dP zwischen den beiden Stirnseiten des Gehäuses 110 besteht, wird der Verformungskörper 122 ausgelenkt. Auf den beiden Oberflächen des Verformungskörpers 122 ist jeweils eine Elektrode 132, 232 vorgesehen. Jede dieser Elektroden 132, 232, bildet mit einer entsprechenden Gegenelektrode 131, 231 jeweils einen Kondensator. Die Kapazitäten $C_1$ und $C_2$ der beiden Kondensatoren sind miteinander korreliert, da eine Vergrößerung des Elektrodenabstands auf der einen Seite mit einer Verringerung des Elektrodenabstands auf der anderen Seite einhergeht. In diesem Fall gibt eine Abweichung von der Korrelation einen Hinweis auf die Verunreinigung der Übertragungsflüssigkeit in einer der beiden Zellen.

Selbstverständlich können auch bei einem Differenzdruckmesser Teilelektroden zur Temperaturkontrolle vorgesehen sein, wie sie beispielsweise in Fig. 2b dargestellt sind. In diesem Fall wären Änderungen der Druckdifferenz $\delta dP$ zu identifizieren als $\delta d\tilde{P_1} = -\delta dP_2$, wobei gilt:

$$\delta dP1 \doteq \delta dP1 \left[ (\delta C_{1innen} - \delta C_{1außen}) / (\delta C_{1innen} + \delta C_{1außen}) \right],$$

und

$$\delta dP2 \doteq \delta dP2 \left[ (\delta C_{2innen} - \delta C_{2außen}) / (\delta C_{2innen} + \delta C_{2außen}) \right]$$

Eine Abweichungen von der Bedingung $\delta dP_1 = {}^{\sim}-8dP_2$ wäre wieder ein Hinweis auf eine Verunreinigung der Übertragungsflüssigkeit, die mit einer geeigneten Steuerungseinheit nachgewiesen werden kann.

Bei den oben beschriebenen Ausführungsformen ist die Keramikscheibe des kapazitiven Drucksensors in einer Aussparung des Gehäuses angeordnet. In alternativen Ausgestaltungen dieser Ausführungsformen ist die Keramikscheibe nicht in einer Aussparung sondern auf der Stirnfläche eines Gehäuses angeordnet. Ein Überlastschutz ist auf der Rückseite des Keramikscheibe vorgesehen. Der Abstand zwischen den beiden Oberflächen der Keramikscheibe und der Oberfläche des Gehäuses bzw. des Überlastschutz wird dabei vorzugsweise über die Stärke des Befestigungsmittel kontrolliert, durch welches die genannten Komponenten miteinander verbunden sind. Als Befestigungsmittel sind insbesondere Lotringe (vorzugsweise Aktivlotringe) oder eine Glasverbindung geeignet.

Fig. 4 zeigt ein Detail eines weiteren Ausführungsbeispiels, nämlich einen Querschnitt durch einen Endbereich eines Gehäuses 310. Die Stirnseite des Gehäuses weist eine Aussparung 311 auf, die mit einem Verformungskörper 321 abgeschlossen ist. Die Aussparung ist über einen Durchgang mit einem zweiten Verformungskörper und einer beliebigen Druckmessvorrichtung verbunden. Das Volumen zwischen den Verformungskörpern ist mit einer Übertragungsflüssigkeit gefüllt. In dem Volumen ist ein Paar von Elektroden 341, 342 vorgesehen, welches einen Kondensator bildet, dessen Kapazität von der Elektrodengeometrie und von der relativen Dielektrizitätskonstanten des Mediums zwischen den Elektroden abhängt. Insofern als die Elektrodengeometrie konstant ist, liefert die Kapazitätsmessung ein Maß für eine Veränderung der Dielektrizitätskonstanten und somit der Verunreinigung der Übertragungsflüssigkeit.

Das Elektrodenpaar ist vorzugsweise als Ringelektrodenpaar ausgebildet, welches in unmittelbarer Nähe des zu überwachenden Verformungskörpers positioniert ist. Auf diese Weise kann ein Defekt in der Membran sogar dann frühzeitig detektiert werden, wenn lange Diffusionszeiten für das Prozessmedium in der Übertragungsflüssigkeit zu erwarten sind.

Für alle Ausführungsformen ist es vorteilhaft, das zwischen den Verformungskörpern eingeschlossene Volumen zu minimieren. Hierzu können die Kammern flach gestaltet werden und der Durchgang bzw. die Leitungen zwischen den Kammern können Kapillaren sein.

Die Steuerungseinrichtung der erfindungsgemäßen Druckmessvorrichtungen kann entweder eine am Sensorgehäuse montierte elektronische Schaltung umfassen, die vorzugsweise als integrierter Schaltkreis realisiert ist.

Generell ist es zweckmäßig die Übertragungsflüssigkeit so auszuwählen, daß sie sich hinsichtlich der überwachten Materialeigenschaft hinreichend vom Prozeßmedium unterscheidet.

**Bezugszeichenliste**

| | |
|---|---|
| 10 | Gehäuse |
| 11 | Aussparung |
| 12 | Aussparung |
| 20 | Erste Kammer |
| 21 | Erster Verformungskörper |
| 22 | Zweiter Verformungskörper |
| 30 | Zweite Kammer |
| 31 | Gegenelektrode |
| 31a | Teilelektrode |

| 31b | Teilelektrode |
|---|---|
| 32 | Elektrode |
| | |
| 110 | Gehäuse |
| 111 | Aussparung |
| 120 | Erste Kammer |
| 121 | Erster Verformungskörper |
| 122 | Zweiter Verformungskörper |
| 130 | Zweite Kammer |
| 131 | Gegenelektrode |
| 132 | Elektrode |
| 211 | Aussparung |
| 220 | Weitere Kammer |
| 221 | Verformungskörper |
| 231 | Gegenelektrode |
| 232 | Elektrode |
| | |
| 310 | Gehäuse |
| 311 | Aussparung |
| 320 | Kammer |
| 321 | Verformungskörper |
| 341 | Ringelektrode |
| 342 | Ringelektrode |

**Patentansprüche**

1.  Druckmessvorrichtung, umfassend
    ein Gehäuse (10) das einen Durchgang aufweist mit einer ersten Öffnung (11) und einem ersten, zum Prozessmedium exponierten Verformungskörper (21), welcher die erste Öffnung (11) abschließt, einer zweiten Öffnung (12) und einem zweiten Verformungskörper (22), welcher die zweite Öffnung abschießt, und einer Übertragungsflüssigkeit zur Druckeinleitung von dem ersten Verformungskörper (21) auf den zweiten Verformungskörper (22);
    einen kapazitiven Drucksensor, welcher basierend auf der Auslenkung des zweiten Verfornungskörpers (22) ein Mess-Signal erzeugt;
    **dadurch gekennzeichnet,**
    **dass** die Druckmessvorrichtung weiterhin ein Mittel zur Überwachung der relativen Dielektrizitätskonstanten $\varepsilon_r$ der Übertragungsflüssigkeit aufweist, wobei das Mittel zur Überwachung der relativen Dielektrizitätskonstanten $\varepsilon_r$ der Übertragungsflüssigkeit so beschaffen ist, dass es ein Signal erzeugt, wenn sich der Wert der relativen Dielektrizitätskonstanten $\varepsilon_r$ der Übertragungsflüssigkeit über einen Toleranzwert hinaus verändert.

2.  Vorrichtung nach Anspruch 1 wobei der erste Verformungskörper (21) eine Metallmembran (21) ist.

3.  Vorrichtung nach einem der Ansprüche 1 oder 2 wobei der zweite Verformungskörper (22) eine Scheibe aus einem spröden Material, insbesondere eine Keramikscheibe mit einem hohen Anteil von $Al_2O_3$ aufweist.

4.  Vorrichtung nach einem der Ansprüche 1 bis 3, wobei das Mittel zur Überwachung der relativen Dielektrizitätskonstanten $\varepsilon_r$ eine elektronische Steuereinrichtung umfasst, welche die relative Dielektrizitätskonstante $\varepsilon_r$ anhand der druckabhängigen Kapazität des Drucksensors ermittelt.

5.  Vorrichtung nach Anspruch 1, wobei die Vorrichtung mindestens zwei Elektroden aufweist, die in einem im wesentlichen druckunabhängigen geometrischen Verhältnis zueinander angeordnet sind, wobei das Mittel zur Überwachung der relativen Dielektrizitätskonstanten $\varepsilon_r$ eine elektronische Steuereinrichtung aufweist, welche die relative Dielektrizitätskonstante $\varepsilon_r$ der Übertragungsflüssigkeit anhand der Kapazität zwischen diesen Elektroden überwacht.

6.  Vorrichtung nach einem der vorhergehenden Ansprüche wobei der Drucksensor ein Absolutdrucksensor oder ein Relativdrucksensor oder ein Differenzdrucksensor ist.

**Claims**

1. Pressure measuring device comprising:

   a housing (10) exhibiting a channel with a first opening (11) and a first deformation element (21), which is exposed to the process medium and seals the first opening (11), a second opening (12) and a second deformation element (22), which seals the second opening, and a transfer liquid to introduce the pressure from the first deformation element (21) to the second deformation element (22);
   A capacitive pressure sensor which generates a measuring signal based on the deflection of the second deformation element (22);
   **characterized in that**
   the pressure measuring device further comperises a means for monitoring the relative dielectric constant $\varepsilon_r$ of the transfer liquid, whereby the means for monitoring the relative dielectric constant $\varepsilon_r$ of the transfer liquid is designed in such a way that it generates a signal when the value of the relative dielectric constant $\varepsilon_r$ of the transfer liquid changes beyond a specific tolerance value.

2. Device as per Claim 1, where the first deformation element (21) is a metal membrane (21).

3. Device as per one of the Claims 1 or 2, where the second deformation element (22) exhibits a disk made of brittle material, particularly a ceramic disk with a high percentage of $Al_2O_3$.

4. Device as per one of the Claims 1 to 3, where the means for monitoring the relative dielectric constant $\varepsilon_r$ comprises an electronic control unit, which determines the relative dielectric constant $\varepsilon_r$ based on the pressure-dependent capacitance of the pressure sensor.

5. Device as per Claim 1, where the device exhibits at least two electrodes which are geometrically arranged towards one another in an essentially pressure-independent way, where the means for monitoring the relative dielectric constant $\varepsilon_r$ exhibits an electronic control unit that monitors the relative dielectric constant $\varepsilon_r$ of the transfer liquid using the capacitance between these electrodes.

6. Device as per one of the previous claims, where the pressure sensor is an absolute pressure sensor or a relative pressure sensor or a differential pressure sensor.

**Revendications**

1. Dispositif de mesure de pression, comprenant
   un boîtier (10) présentant un passage avec une première ouverture (11) et un corps de déformation (21) exposé au produit, lequel corps obture la première ouverture (11), une deuxième ouverture (12) et un deuxième corps de déformation (22), lequel obture la deuxième ouverture, et un liquide de transmission destiné à la transmission de la pression du premier corps de déformation (21) vers le deuxième corps de déformation (22) ;
   un capteur de pression capacitif, lequel génère un signal de mesure sur la base de la l'excursion du deuxième corps de déformation (22)
   **caractérisé en ce que**
   le dispositif de mesure de pression comprend en outre un moyen destiné à la surveillance de la constante diélectrique relative $\varepsilon_r$ du liquide de transmission, le moyen destiné à la surveillance de la constante diélectrique relative $\varepsilon_r$ étant conçu de telle manière à générer un signal lorsque la valeur de la constante diélectrique relative $\varepsilon_r$ du liquide de transmission varie au-delà d'une valeur de tolérance déterminée.

2. Dispositif selon la revendication 1, pour lequel le premier corps de déformation (21) est une membrane métallique (21).

3. Dispositif selon l'une des revendications 1 ou 2, pour lequel le deuxième corps de déformation (22) est un disque composé d'un matériau dur comme le verre, notamment un disque en céramique avec une grande part d'$Al_2O_3$.

4. Dispositif selon l'une des revendications 1 à 3, pour lequel le moyen destiné à la surveillance de la constante diélectrique relative $\varepsilon_r$ comprend un dispositif de commande électronique, lequel détermine la constante diélectrique relative $\varepsilon_r$ au moyen de la capacité, variable en fonction de la pression, du capteur de pression.

**5.** Dispositif selon la revendication 1, le dispositif comprenant au minimum deux électrodes, lesquelles sont disposées l'une par rapport à l'autre, pour l'essentiel, selon un rapport géométrique fonction de la pression, le moyen destiné à la surveillance de la constante diélectrique relative $\varepsilon_r$ comprenant un dispositif de commande électronique, lequel surveille la constante diélectrique relative $\varepsilon_r$ du liquide de transmission au moyen de la capacité présente entre ces électrodes.

**6.** Dispositif selon l'une des revendications précédentes, pour lequel le capteur de pression est un capteur de pression absolue ou un capteur de pression relative ou un capteur de pression différentielle.

**Fig. 1**

20 21 11

12

10

32 22 31 30 13

**Fig. 2a**

20 21

10

22 31a 30 31b

**Fig. 2b**

31a

31b

**Fig. 3**

132  131  120  121  111

122

130

110

232

231

220  221  211

**Fig. 4**

341  342  321  320  311

310

Fig. 5

**IN DER BESCHREIBUNG AUFGEFÜHRTE DOKUMENTE**

**In der Beschreibung aufgeführte Patentdokumente**

- US 5212989 A
- US 5072190 A
- US 3231815 A